# EUROPEAN PATENT SPECIFICATION

(11) **EP 2 191 313 B1**
(45) Date of publication and mention of the grant of the patent: **09.03.2016**
(21) Application number: 08788759.2
(22) Date of filing: 05.09.2008
(51) Int. Cl.: G02B 6/44, H02G 3/32

(54) **CABLE TERMINATION CLAMP WITH INCLINED GRIPPING MEANS**
KABELKLEMME MIT SCHRÄGGESTELLTEN HALTEELEMENTEN
PINCE DE TERMINAISON DE CÂBLE À SYSTÈME DE PRÉHENSION INCLINÉ

(30) Priority: 24.09.2007 GB 0718608
(43) Date of publication of application: 02.06.2010
(73) Proprietor: Tyco Electronics Raychem BVBA, 3010 Kessel-Lo (BE)
(72) Inventor: KEMPENEERS, Dirk, B-3200 Aarschot (BE); RADELET, Christiaan, B-3200 Aarschot (BE); VANHENTENRIJK, Robert, B-3020 Winksele (BE); VASTMANS, Kristof, B-3370 Boutersem (BE); NIJS, Walter, B-3220 Holsbeek (BE)
(74) Representative: Grünecker Patent- und Rechtsanwälte PartG mbB
(86) International application number: PCT/GB2008/050789
(87) International publication number: WO 2009/040566

(56) References cited:
- EP-A- 0 735 394
- WO-A-2005/051472
- FR-A- 2 599 567
- US-A- 4 145 075
- US-A- 5 393 021

## Description

This invention relates to a cable termination device, especially an optical cable termination device, and to assemblies and methods using this device.

Optical cable termination devices providing Integrated Strain Relief On Drop-cables (ISROD devices) are described in WO-A-2005/073767 (B452).

Further, in EP 0 735 394 A2 an optical fiber clamping device is shown which comprises a body part including a through passage way to receive the optical fiber wherein axially spaced ridges are provided. The ridges engage in groves on an optical fiber protection tube which is dimensioned to be received in the passageway and to accommodate the optical fiber. The WO-2005/051472 A2 describes a device for securing a wire comprising a groove for accommodating the wire. The groove is provided with flexible retaining means.

The present invention relates to termination devices that may be more quickly and conveniently applied to a cable without depending unduly on the craft skills of the installer, and that are well suited to high density installations which are increasingly encountered in practice, especially in optical drop cable installations for so-called "Fibre To The Home" (FTTH) services.

A first aspect of the invention accordingly provides a cable termination device according to claim 1. The specified inclination angle of the resilient tongues has the advantage of preventing the tongues from cutting into the cable sheath when the cable is pulled in a direction away from its terminated end. It has unexpectedly been discovered that the plate-like tongues can twist laterally when the cable is pulled, and the specified inclination reduces the tendency for such twisting to force the edge of the tongues into the cable sheath.

Preferred aspects of the invention further provide the cable termination device with one or more mounting feet extending from the termination device in a first direction lateral to the cable longitudinal axis (when the cable is present), which mounting feet are arranged for engagement with a mounting support to attach the cable laterally to the support, wherein the width of the mounting feet in a second direction across the said cable axis is not greater than the width of the termination device across the cable axis, so that the feet are not wider than the device, thereby enabling two or more such termination devices to be engaged with the mounting support in close or touching proximity to one another.

According to the invention, the gripping means comprises first and second parts engageable with each other to grip the cable between them. In some forms, the said parts are shaped to engage in a tapering or wedging action which increases their gripping. force on the cable when present and pulled in a direction away from its terminated end. In other preferred forms, at least one of the said parts incorporates one or more resilient plate-like tongues arranged to extend across the cable longitudinal axis and to resiliently press against the cable (when present), and the said tongues are inclined at an angle within the range from 2° to 15° towards the cable (when present) in a sense pointing away from its unsecured end.

In all aspects of the invention having two parts as aforesaid, it is preferred that the said two parts are adapted to snap-fit together. Snap-fitting enables quick and reliable installation, especially if the parts are shaped or provided with stop means to limit their snap-fitting engagement to fit around and grip a cable of pre-determined diameter. In one preferred form of snap-fit device the said parts incorporate hinge formations adapted to be hinged together near one end of the device, and have at least one snap-fit closure means located towards or at the other end of the device, whereby the device can be hingedly assembled (around the cable when present) in an open-jaw position and can then be angularly closed about the hinge formations to engage the snap-fit closure means and grip the cable.

A third aspect of the present invention provides an assembly of a cable terminated by a termination device according to the aforementioned first aspect of this invention, and a mounting support having formations for receiving the said mounting feet of the device to secure the device and the cable to the support. Preferably the receiving formations are slots in the support adapted to receive and secure the mounting feet of the device. In preferred assemblies according to this aspect of the invention, at least one of the mounting feet extends in a direction along the cable longitudinal axis (when the cable is present) towards a distal free end having a lateral tooth or other detent means at or near the said distal end, and the receiving formations of the mounting support are arranged to permit engagement of the mounting feet therewith followed by sliding movement to engage the said tooth or other detent means with a detent formation to secure the termination device relative to the support. It is especially preferred that the said tooth or other detent means snap-fits into the detent formation. The invention enables advantageous high-density assemblies to be made, wherein a plurality of cables are terminated and secured to the mounting support by a plurality of the termination devices according to the invention in close or touching proximity to one another.

The invention also includes (a) a cable termination device and a mounting support supplied and suitable for forming an assembly according to the aforesaid third aspect of the invention; and (b) a method of terminating an optical cable according to claim 9.

Specific embodiments of the present invention will be described by way of example with reference to the accompanying drawings, wherein:
Figure 1 shows in perspective a dis-assembled two-part cable termination device according to the invention and the assembled device in use securing an optical cable to a mounting support plate,
Figures 2A and 2B show in perspective three steps involved in terminating the cable with the device of Figure 1 and securing it to the mounting plate,
Figures 3A and 3B illustrate in more detail a preferred form of mounting feet for the termination device and the mounting apertures in the support plate,
Figure 4 schematically shows a method of securing an elongate strength member of an optical cable by means of the termination device,
Figures 5A and 5B show in partial cross-section a preferred profile for the mounting feet of the termination device to facilitate its use with (thicker) plastics mounting plates and with (thinner) metal mounting plates,
Figure 6 shows in perspective and in side elevation details of a preferred cable-gripping component of the termination device, and
Figure 7 shows in perspective an alternative form of termination device according to the invention having a wedging action.

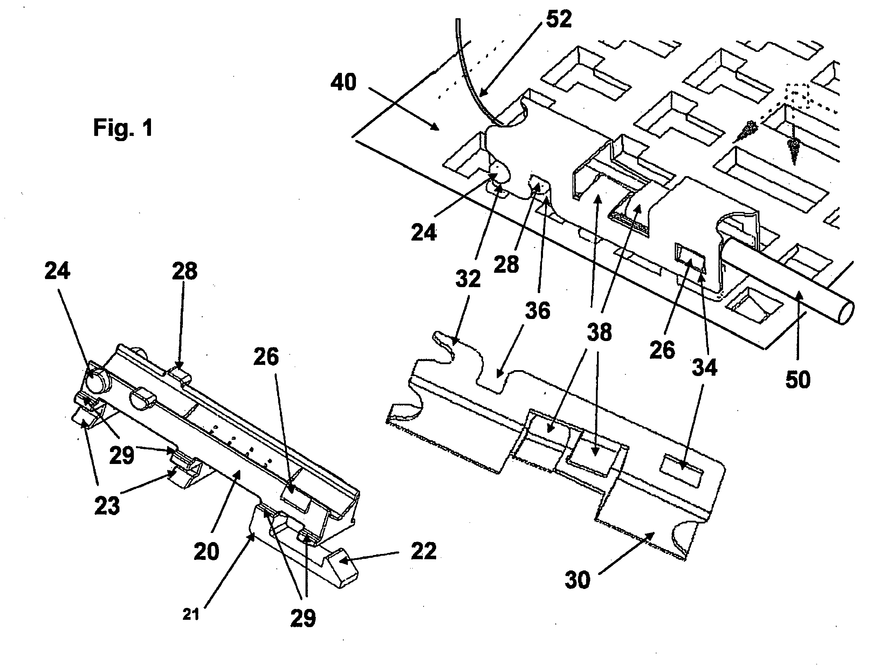

Referring to the drawings, Figure 1 shows a "bottom" part 20 and a "top" part 30 of a two-part cable termination device according to the invention and shows use of this device as an ISROD device mounting an optical fibre drop cable 50 on a mounting support plate 40, with an optical fibre 52 extending from the end of the cable and beyond the end of the device. References to "bottom" and "top" parts of the ISROD termination device are for convenient description and do not imply any specific orientation of the device relative to its surroundings in use. The bottom part 20 has a pair of hinging bosses 24 near one of its ends and a pair of snap-ft projections 26 near its other end. The top part 30 has a pair of hinging recesses 32 near one of its ends which are engageable with the bosses 24 of the bottom part, and has a pair of snap detent apertures 34 near its other end. The projections 26 of the bottom part snap fit into the apertures 34 of the top part on closure of the two parts together with the top part 30 fitting over and outside the bottom part 20, as shown on the mounting plate 40. Guide bosses 29 on the bottom part fit into guide recesses 36 of the top part, and stop shoulders 29 are provided on the bottom part to help control the closure of the device. The respective parts are made of materials providing sufficient flexibility for the snap-fitting action.

The top part of the device carries a pair of resilient plate-like tongues 38, which will be further described below; and the bottom part of the device carries integral mounting feet 21, 23 designed to fit into mounting slots on the mounting plate 40, with a detent tooth 22 on the foot 21 as further described below.

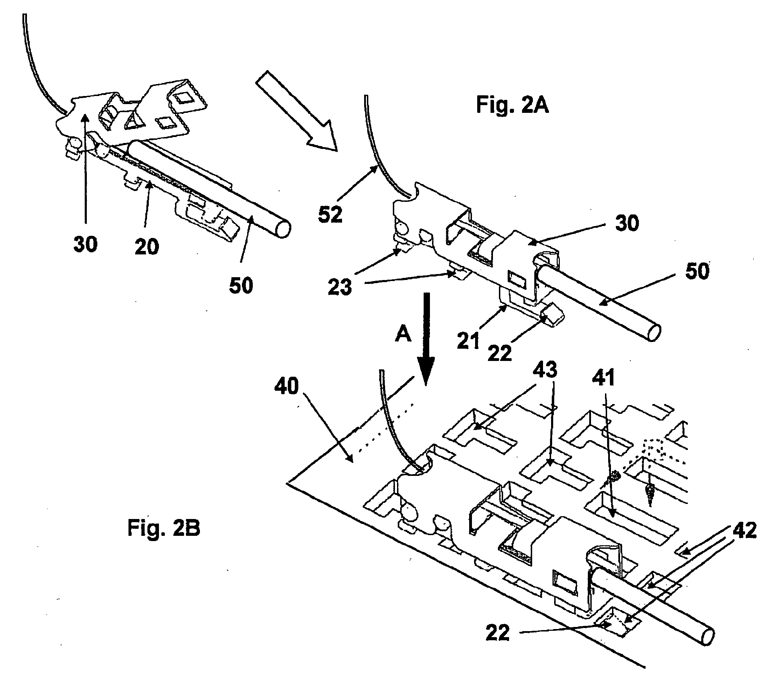

Figure 2A shows a first step wherein the parts 20, 30 of the ISROD termination device are assembled around the cable 50 in a hinged open-jaw position, proceeding as indicated by the large white arrow to a second step wherein the device is snapped closed to grip the cable. In Figure 2B, the thus-terminated cable is moved towards mounting plate 40 as indicated by the large black arrow A in a third step wherein the mounting feet 21, 23 of the termination device are inserted into mounting slots 41, 43 of the mounting plate, followed by sliding movement in a direction towards the cable 50 to snap the detent tooth 22 of foot 21 into a detent aperture 42 of the mounting plate.

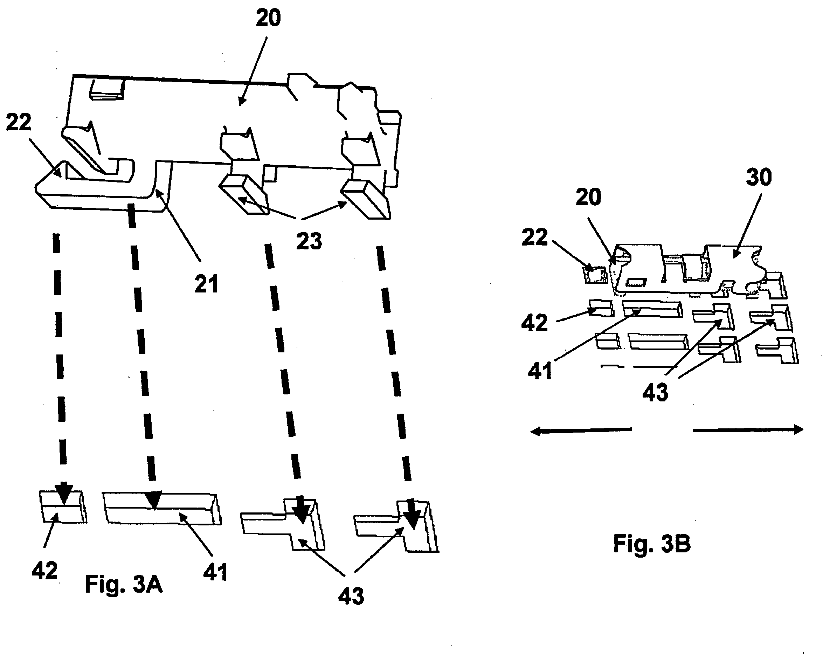

This mounting step, and subsequent disengagement of the terminated cable from the mounting plate are further illustrated in Figures 3A and 3B. As indicated by the dark broken arrows the mounting feet 21 and 23 on the bottom part 20 of the termination device are respectively dimensioned to fit through mounting slot 41 and through the wider parts of mounting slots 43 in the mounting plate followed by sliding movement toward the incoming optical cable 50 (see Figure 2) to snap the detent tooth 22 of foot 21 into the detent aperture 42 of the mounting support. The mounted termination device, as shown in Figure 3B, can subsequently be released to remove the cable from the mounting plate by depressing the tooth 22 which is accessible below the incoming cable 50, followed by sliding to align and remove the feet through the mounting slots 41, 43. It will readily be understood that a plurality of termination devices can be thus mounted in adjacent rows of mounting slots on the mounting support to secure a plurality of incoming cables in an array with the termination devices in close or touching proximity to one another. Selected cables can readily be released from this high-density array by lifting the selected cable and depressing its detent tooth 22 as described above.

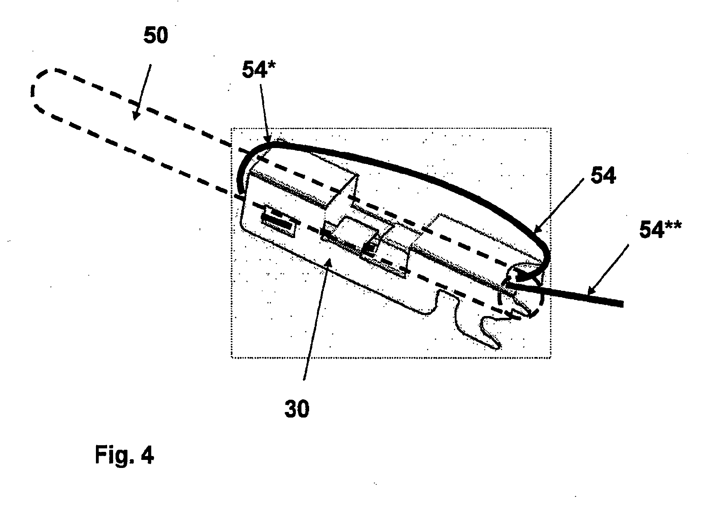

Figure 4 shows schematically the aforementioned securing of the elongate strength member 54, usually consisting of Kevlar™ fibres, which extends from the end of some types of optical cable 50, by turning it back along the length of the termination device top part 30 to a point 54* and re-inserting it into the device, in this example to an extent where an end portion 54** of the strength member projects from the device beyond the terminated end of the cable. Closure of the top part 30 with the bottom part 20 of the termination device will clamp the strength member against the cable, thus enhancing the strain relief provided by this ISROD device.

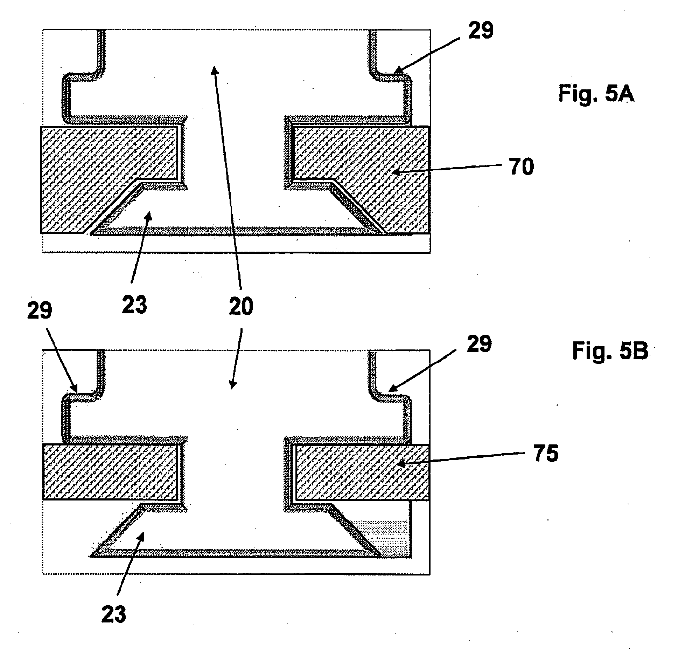

Figures 5A and 5B respectively show how the mounting feet 23 and detent shoulders 29 of the bottom part 20 of the termination device are designed to accommodate a relatively thick mounting plate 70 of plastics material or a relatively thin metal mounting plate 75.

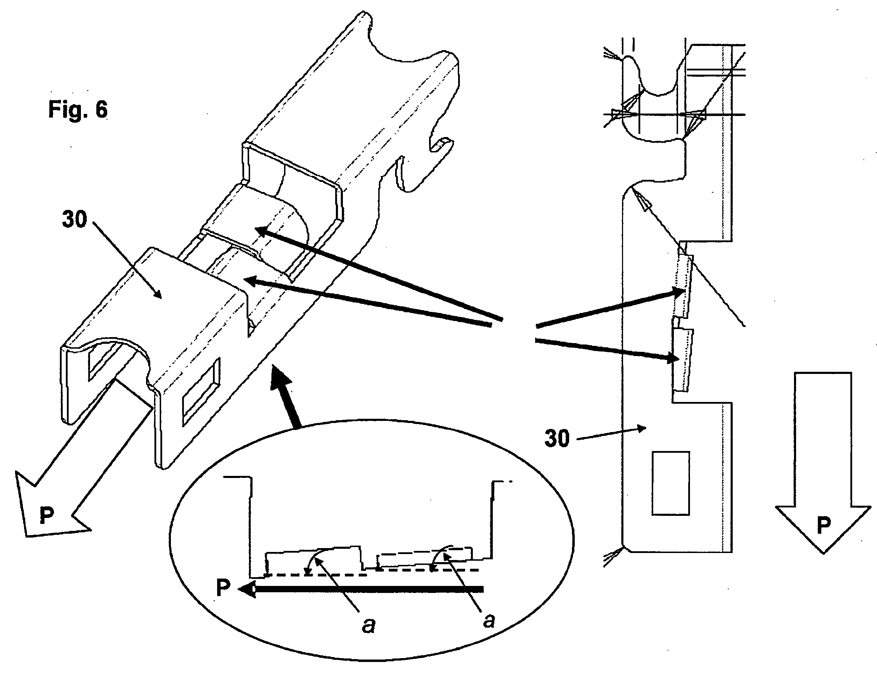

Figure 6 shows the aforementioned plate-like tongues 38 of the top part 30 of the termination device, with the elliptical inset illustrating the inclination of the tongues 38 toward the cable (not shown in this view) at an angle "a" in the direction of the incoming cable, indicated by "Pulling Direction" arrow P. The angle "a" may be selected within the range from 2 degrees to 15 degrees and is preferably 5 degrees.

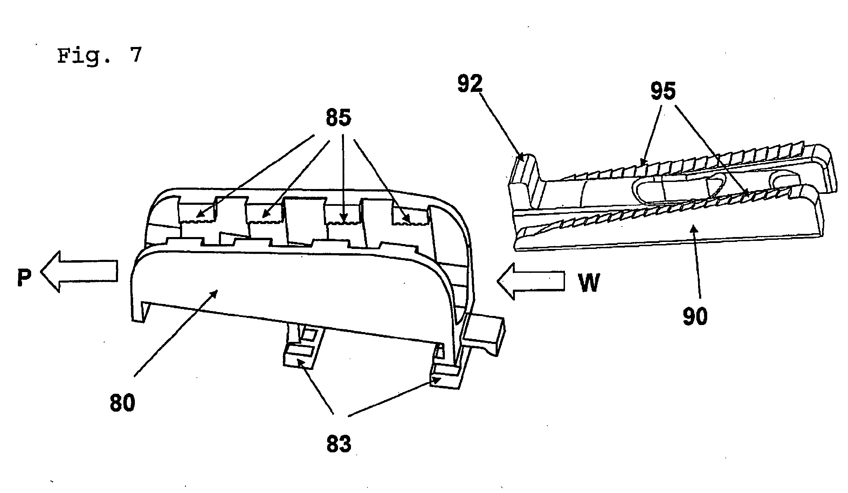

Figure 7 shows a version of the aforementioned alternative wedge-action termination device having a "bottom" part 80 with mounting feet 83, preferably similar to the feet 21, 23 of the bottom part 20 previously described, and a "top" part having a generally wedge shape tapering in the direction of the incoming cable pulling direction indicated by arrow P. After the cable (not shown) has been placed in the bottom part 80 with the cable end facing towards the top part 90 (in the illustration position) the top part 90 is pulled into the bottom part 80 by means of the pulling handle 92. The resulting wedging action progressively tightens the grip of the parts 80 and 90 on the cable and the ratchet teeth 85, 95 engage to resist subsequent loosening of the grip.

The termination devices and mounting supports of this invention may be made of any convenient and suitable materials, for example metal or moulded plastics, using methods known per se. The devices may be used to terminate and secure connectorised optical fibre cables, for example those supplied by Tyco Electronics under the trade mark "Xpress Drop", as well as the incoming cables mainly described here.

## Claims

1. A cable termination device comprising first and second parts engageable (20, 30, 80, 90) with each other to grip between them a cable (50) near its unsecured end, wherein at least one of the said parts (20, 30, 80, 90) incorporates gripping means **characterised in that** the gripping means comprise one or more resilient plate-like tongues (38) arranged to extend across the cable longitudinal axis and to resiliently press against the cable (50) and **in that** the said tongues (38) are inclined at an angle in the direction (P) of the incoming cable (50), within the range from 2° to 15° towards the cable (50) in a sense pointing away from its terminated end such as to prevent the tongues (38) from cutting into the cable sheath when the cable (50) is pulled in a direction (P) away from its terminated end.

2. A termination device according to claim 1, **characterized in that** it additionally comprises one or more mounting feet (21, 23, 83) extending from the termination device in a first direction lateral to the cable longitudinal axis which mounting feet (21, 23, 83) are arranged for engagement with a mounting support (40, 70, 75) to attach the cable (50) laterally to the support (40, 70, 75) wherein the width of the mounting feet (21, 23, 83) in a second direction across the said cable axis is not greater than the width of the termination device across the cable axis, so that the feet (21, 23, 83) are not wider than the device, thereby enabling two or more such termination devices to be engaged with the mounting support (40, 70, 75) in close or touching proximity to one another.

3. A termination device according to any preceding claim, **characterized in that** the said two parts (20, 30, 80, 90) are adapted to snap-fit together.

4. A termination device according to claim 3. **characterized in that** the said parts (20, 30, 80, 90) incorporate hinge formations (24, 32) adapted to be hinged together near one end of the device, and have at least one snap-fit closure means (28, 36) located towards or at the other end of the device, whereby the device can be hingedly assembled in an open-jaw position and can be angularly closed about the hinge formations (24, 32) to engage the snap-fit closure means (28, 36).

5. An assembly of a cable terminated by a termination device according to claim 2 and a mounting support (40, 70, 75) having slots (41, 42, 43) or other formations (42) by which the said mounting feet (21, 23, 83) of the device are received to secure the device and the cable (50) to the support (40, 70, 75).

6. An assembly according to claim 5, **characterized in that** at least one of the mounting feet (21, 23, 83) extends in a direction along the cable longitudinal axis towards a distal free end having a lateral tooth (22) or other detent means (29) at or near the said distal end, and the receiving formations of the mounting support (40, 70, 75) are arranged to permit engagement of the mounting feet (21, 23, 83) therewith followed by sliding movement to snap-fit or otherwise engage the said tooth (22) or other detent means (29) with a detent formation (41, 42, 43) to secure the termination device relative to the support (40, 70, 75).

7. An assembly according to claim 5 or 6, **characterized in that** a plurality of cables (50) are terminated and secured to the mounting support (40, 70, 75), by a plurality of the terminations devices in close or touching proximity to one another.

8. A cable termination device and a mounting support (40, 70, 75), **characterized in that** they are supplied and suitable for forming an assembly according to any of claims 5 to 7

9. A method of terminating an optical cable (50) having an elongate strength member (54) extending from its end, **characterized in that** a termination device according to any of claims 1 to 4 is positioned around the end of the cable (50), the strength member (54) is passed back along the exterior of the termination device and is re-inserted into the rear end of the termination device remote from the cable end, and the termination device is subsequently caused to grip both the cable (50) and the strength member (54).

## Patentansprüche

1. Kabelanschlusseinrichtung mit einem ersten und einem zweiten Teil, die miteinander in Eingriff bringbar sind (20, 30, 80, 90), um zwischen sich ein Kabel (50) im Bereich seines nicht befestigten Endes zu halten, wobei mindestens einer der Teile (20, 30, 80, 90) ein Halteelement aufweist, **dadurch gekennzeichnet, dass** das Halteelement eine oder mehrere elastische plattenförmige Zungen (38) aufweist, die angeordnet sind, sich quer zu der Kabellängsachse zu erstrecken und elastisch gegen das Kabel (50) zu drücken, und dass die Zungen (38) mit einem Winkel in der Richtung (P) des ankommenden Kabels (50) in einem Bereich von 2° bis 15° zu dem Kabel (50) in einer Weise geneigt sind, dass sie von dessen angeschlossenen Ende weg zeigen, so dass verhindert wird, dass die Zungen (38) in den Kabelmantel schneiden, wenn das Kabel (50) in einer Richtung (P) weg von seinem angeschlossenen Ende gezogen wird.

2. Anschlusseinrichtung nach Anspruch 1, **dadurch gekennzeichnet, dass** sie ferner einen oder mehrere Montagefüße (21, 23, 83) aufweist, die sich von der Anschlusseinrichtung in einer ersten Richtung lateral zu der Kabellängsachse erstrecken, wobei die Montagefüße (21, 23, 83) zum Eingriff in eine Montagehalterung (40, 70, 75) angeordnet sind, um das Kabel (50) lateral an der Halterung (40, 70, 75) zu befestigen, wobei die Breite der Montagefüße (21, 23, 83) in einer zweiten Richtung quer zu der Kabelachse nicht größer ist als die Breite der Anschlusseinrichtung quer zu der Kabelachse, so dass die Füße (21, 23, 83) nicht breiter als die Einrichtung sind, wodurch es möglich ist, dass zwei oder mehr derartige Anschlusseinrichtungen in unmittelbarer Nähe zueinander oder einander berührend mit der Montagehalterung (40, 70, 75) in Eingriff bringbar sind.

3. Anschlusseinrichtung nach einem vorhergehenden Anspruch, **dadurch gekennzeichnet, dass** die zwei Teile (20, 30, 80, 90) ausgebildet sind, miteinander eine Schnappverbindung zu bilden.

4. Anschlusseinrichtung nach Anspruch 3, **dadurch gekennzeichnet, dass** die Teile (20, 30, 80, 90) Gelenksstrukturen (24, 32) aufweisen, die ausgebildet sind, in der Nähe eines Endes der Einrichtung als Gelenk in Kontakt zu treten, und mindestens eine Schnappverbindungs-Verschlusseinrichtung (28, 36) haben, die in Richtung zu oder an dem anderen Ende der Einrichtung angeordnet ist, wodurch die Einrichtung gelenksartig in einer Stellung einer offenen Backe zusammengefügt und winklig um die Gelenksstrukturen (24, 32) herum geschlossen werden kann, um mit der Schnappverbindungs-Verschlusseinrichtung (28, 36) in Eingriff zu treten.

5. Anordnung eines Kabels, das durch eine Anschlusseinrichtung gemäß Anspruch 2 angeschlossen ist, und einer Montagehalterung (40, 70, 75) mit Ausnehmungen (41, 42, 43) oder anderen Strukturen (42), durch welche die Montagefüße (21, 23, 83) der Einrichtung aufgenommen werden, um die Einrichtung und das Kabel (50) an der Halterung (40, 70, 75) zu befestigen.

6. Anordnung nach Anspruch 5, **dadurch gekennzeichnet, dass** der mindestens eine der Montagefüße (21, 23, 83) sich in einer Richtung entlang der Kabellängsachse erstreckt in Richtung zu einem abgewandten freien Ende mit einer lateralen Zacke (23) oder einer anderen Arretierungseinrichtung (29) an oder in der Nähe des abgewandten Endes, und dass die aufnehmenden Strukturen der Montagehalterung (40, 70, 75) ausgebildet sind, Eingriff der Montagefüße (21, 23, 83) mit anschließender Gleitbewegung zum Einrasten oder anderweitigem Eingriff der Zacke (22) oder der anderen Arretierungseinrichtung (29) mit einer Arretierungsstruktur (41, 42, 43) zu ermöglichen, um die Anschlusseinrichtung relativ zu der Halterung (40, 70, 75) zu befestigen.

7. Anordnung nach Anspruch 5 oder 6, **dadurch gekennzeichnet, dass** mittels mehrerer Anschlusseinrichtungen in unmittelbarer Nähe zueinander oder einander berührend mehrere Kabel (50) angeschlossen und an der Montagehalterung (40, 70, 75) befestigt sind.

8. Kabelanschlusseinrichtung und Montagehalterung (40, 70, 75), **dadurch gekennzeichnet, dass** sie bereitgestellt und geeignet sind, eine Anordnung nach einem der Ansprüche 5 bis 7 zu bilden.

9. Verfahren zum Anschließen eines optischen Kabels (50) mit einem länglichen Verstärkungselement (54), das sich von dem Kabelende erstreckt, **dadurch gekennzeichnet, dass** eine Anschlusseinrichtung gemäß einem der Ansprüche 1 bis 4 um das Ende des Kabels (50) herum angeordnet ist, das Verstärkungselement (54) entlang der Außenseite der Anschlusseinrichtung zurückgeführt und wieder in das hintere Ende der Einrichtung abgewandt von dem Kabelende eingeführt wird, und nachfolgend veranlasst wird, dass die Anschlusseinrichtung sowohl das Kabel (50) als auch das Verstärkungselement (54) hält.

## Revendications

1. Dispositif de terminaison de câble comprenant une première et une seconde pièces en prise (20, 30, 80, 90) l'une avec l'autre pour saisir entre elles un câble (50) près de son extrémité libre, où au moins l'une desdites pièces (20, 30, 80, 90) comprend un moyen de préhension **caractérisé en ce que** le moyen de préhension comprend une ou plusieurs languettes résilientes de type plaque (38) disposées pour s'étendre à travers l'axe longitudinal du câble et pour appuyer de manière résiliente contre le câble (50) et **en ce que** lesdites languettes (38) sont inclinées sous un angle dans le sens (P) du câble entrant (50), à l'intérieur de la plage de 2° à 15° vers le câble (50) dans un sens pointant loin de son extrémité afin d'empêcher les languettes (38) de se couper à l'intérieur de la gaine de câble lorsque le câble (50) est retiré dans un sens (P) loin de son extrémité.

2. Dispositif de terminaison selon la revendication 1, **caractérisé en ce qu'**il comprend de manière supplémentaire un ou plusieurs pieds de montage (21, 23, 83) s'étendant depuis le dispositif de terminaison dans un premier sens latéral à l'axe longitudinal du câble lesquels pieds de montage (21, 23, 83) sont disposés pour se trouver en prise avec un support de montage (40, 70, 75) pour fixer le câble (50) latéralement au support (40, 70, 75) où la largeur des pieds de montage (21, 23, 83) dans un second sens à travers ledit axe de câble n'est pas supérieure à la largeur du dispositif de terminaison à travers l'axe du câble, de sorte que les pieds (21, 23, 83) ne sont pas plus larges que le dispositif, permettant de là à deux ou plusieurs de ces types de dispositif de terminaison de se trouver en prise avec le support de montage (40, 70, 75) en étroite proximité ou se touchant l'un l'autre.

3. Dispositif de terminaison selon l'une quelconque des revendications précédentes, **caractérisé en ce que** lesdites deux pièces (20, 30, 80, 90) sont adaptées pour s'ajuster ensemble par pression.

4. Dispositif de terminaison selon la revendication 3, **caractérisé en ce que** lesdites pièces (20, 30, 80, 90) intègrent des formations articulées (24, 32) adaptées pour s'articuler ensemble près d'une extrémité du dispositif, et ont au moins un moyen de fermeture à ajustement par pression (28, 36) localisé vers ou à l'autre extrémité du dispositif, moyennant quoi le dispositif peut être assemblé de manière articulée dans une position de mâchoires ouvertes et peut être fermé de manière angulaire autour des formations articulées (24, 32) pour mettre en prise le moyen de fermeture ajusté par pression (28, 36).

5. Ensemble de câble terminé par un dispositif de terminaison selon la revendication 2 et un support de montage (40, 70, 75) ayant des fentes (41, 42, 43) ou d'autres formations (42) par lesquelles lesdits pieds de montage (21, 23, 83) du dispositif sont reçus pour fixer le dispositif et le câble (50) au support (40, 70, 75).

6. Ensemble selon la revendication 5, **caractérisé en ce qu'**au moins l'un des pieds de montage (21, 23, 83) s'étend dans un sens le long de l'axe longitudinal du câble vers une extrémité distale libre et ayant une dent latérale (22) ou un autre moyen de détente (29) au niveau ou près de ladite extrémité distale, et les formations de réception du support de montage (40, 70, 75) sont disposées pour permettre la mise en prise des pieds de montage (21, 23, 83) les uns avec les autres suivi d'un mouvement de glissement pour ajuster par pression ou sinon mettre en prise ladite dent (22) ou un autre moyen de détente (29) avec une formation de détente (41, 42, 43) pour fixer le dispositif de terminaison vis-à-vis du support (40, 70, 75).

7. Ensemble selon la revendication 5 ou 6, **caractérisé en ce qu'**une pluralité de câbles (50) sont terminées et fixées au support de montage (40, 70, 75), par une pluralité de dispositifs de terminaison en proximité étroite ou se touchant l'un l'autre.

8. Dispositif de terminaison de câble et support de montage (40, 70, 75), **caractérisés en ce qu'**ils sont fournis et qu'ils conviennent à la formation d'un ensemble selon l'une quelconque des revendications 5 à 7.

9. Procédé de terminaison d'un câble optique (50) ayant un élément allongé de résistance mécanique (54) s'étendant depuis son extrémité, **caractérisé en ce qu'**un dispositif de terminaison selon l'une quelconque des revendications 1 à 4 est positionné autour de l'extrémité du câble (50), l'élément de résistance mécanique (54) revient le long de l'extérieur du dispositif de terminaison et est réinséré dans l'extrémité arrière du dispositif de terminaison loin de l'extrémité du câble, et le dispositif de terminaison est par la suite conduit à saisir à la fois le câble (50) et l'élément de résistance mécanique (54).
